# NEUE EUROPÄISCHE PATENTSCHRIFT

(11) **EP 2 726 442 B2**
(45) Veröffentlichungstag und Bekanntmachung des Hinweises auf die Entscheidung über den Einspruch: **10.04.2019**
(45) Hinweis auf die Patenterteilung: 27.04.2016
(21) Anmeldenummer: 12729612.7
(22) Anmeldetag: 25.06.2012
(51) Int. Cl.: C05D 9/02, C11D 3/33

(54) **MODIFIZIERTE AMINOCARBOXYLATE MIT VERBESSERTER LAGERSTABILITÄT UND VERARBEITBARKEIT**
MODIFIED AMINOCARBOXYLATES WITH IMPROVED SHELF LIFE AND PROCESSING PROPERTIES
AMINOCARBOXYLATES MODIFIÉS AYANT UNE MEILLEURE STABILITÉ À L'ENTREPOSAGE ET UNE MEILLEURE OUVRABILITÉ

(30) Priorität: 29.06.2011 EP 11171904
(43) Veröffentlichungstag der Anmeldung: 07.05.2014
(73) Patentinhaber: BASF SE, 67056 Ludwigshafen am Rhein (DE)
(72) Erfinder: LANG, Frank-Peter, 65795 Hattersheim (DE); HARTMANN, Markus, 67434 Neustadt (DE); GARCIA, Marcos Alejandra, 67063 Ludwigshafen (DE); HUEFFER, Stephan, 67063 Ludwigshafen (DE)
(74) Vertreter: BASF IP Association
(86) Internationale Anmeldenummer: PCT/EP2012/062187
(87) Internationale Veröffentlichungsnummer: WO 2013/000848

(56) Entgegenhaltungen:
- EP-A1- 0 053 246
- WO-A1-96/33693
- WO-A1-99/22705
- WO-A1-2007/052004
- WO-A1-2010/076291
- DE-A1- 10 008 312
- DE-A1- 10 247 201
- GB-A- 2 311 535
- GB-A- 2 311 538
- GB-A- 2 487 298
- KR-A- 20040 050 564
- US-A- 4 663 071
- US-A- 6 080 708
- US-A- 6 162 259
- US-A1- 2004 052 736
- US-A1- 2006 030 155
- US-A1- 2008 045 430
- US-A1- 2011 086 115
- DATABASE WPI Week 201240 Thomson Scientific, London, GB; AN 2012-E63663 XP002683773, & CN 102 408 803 A (GUANGZHOU QINGTIAN IND CO LTD) 11. April 2012 (2012-04-11)
- Ullmann's Encyclopedia, vol. 21, no. 4th edition, 1982, pages 439-443 and 462-476,
- JACC No. 51, Synthetic Amorphous Silica, September 2006 (2006-09), pages 1-56,
- Trilon M brochure, BASF AG, May 2007 (2007-05),

## Beschreibung

Die Erfindung betrifft Aminocarboxylate in fester Form, die eine höhere Lagerstabilität und verbesserte Verarbeitbarkeit aufweisen, sowie deren Anwendung in Haushaltsprodukten, insbesondere Wasch-, Reinigungs- und Pflegemitteln, als Spurennährstoffdünger für Pflanzen und in technischen Verfahren.

Aminocarboxylate sind eine sehr wichtige Gruppe von Komplexbildnern. Komplexbildner, insbesondere die Aminocarboxylate, spielen heute in allen Prozessen eine wichtige Rolle, an denen Wasser teilnimmt. Ein zentrales Problem ist hier die Störung dieser Prozesse durch das Einbringen unerwünschter Metallionen, wie z. B. der Härtebildner des Wassers Ca²⁺ und Mg²⁺, von Ba²⁺ und von Schwermetallionen. Die Ursache der Prozessstörungen liegt einerseits oft in der Bildung schwer löslicher Niederschläge von Erdalkali- oder Schwermetallsalzen. Die Folge sind z. B. Beläge an Wärmeaustauscherflächen und damit eine Beeinträchtigung des Wärmeübergangs oder Verstopfungen von Leitungen, Ventilen oder Düsen. Ferner werden durch bestimmte Schwermetallionen, wie Fe³⁺, Mn²⁺ oder Cu²⁺ katalytische Reaktionen eingeleitet. Sie können zu einer unerwünschten Zersetzung von Formulierungsbestandteilen führen, z.B. der Zersetzung von Wasserstoffperoxid bei der Zellstoffbleiche in der Papierherstellung oder der Zersetzung des Bleichsystems in Vollwaschmitteln. Zur Vermeidung dieser störenden Effekte hat sich die Maskierung der Metallionen durch Komplexbildner am besten bewährt. Hierdurch wird die Konzentration freier Metallionen soweit abgesenkt, so dass beispielsweise die Bildung schwerlöslicher Niederschläge oder die Katalyse unerwünschter chemischer Reaktionen vermieden wird. Aufgrund ihrer guten Stabilität gegenüber anderen Formulierungsbestandteilen oder Prozesshilfsmitteln, wie Säuren, Alkalien, oxidierenden oder reduzierenden Agenzien, sowie gegenüber thermischen Einflüssen finden als Komplexbildner die Aminocarboxylate eine große Anzahl verschiedenster Einsatzgebiete.

Aminocarboxylate kommen beispielsweise in den folgenden Anwendungsgebieten zum Einsatz: Zur Wasserenthärtung, insbesondere von Kesselspeisewasser; in Waschmitteln für Textilien, zwecks Verbesserung der Primärwaschkraft und des Sekundärwaschvermögens (Reduktion von Gewebeinkrustierung und -vergrauung), ferner zur Vermeidung von Ablagerungen auf Heizstäben und zur Stabilisierung des Bleichsystems (Perborat, Percarbonat) in Vollwaschmitteln und Bleichmitteln; in Seifen zur Vermeidung des Ranzigwerdens und von Verfärbungen, beides durch Schwermetallspuren verursacht; in sauren, neutralen oder alkalischen Reinigern für Haushalt und Gewerbe, z. B. in Autoreinigungsmitteln, Kaltreinigern, Allweckreinigern, Desinfektionsreinigern, Molkereireinigern, Sanitärreinigern, Flaschenreinigungsmitteln und in maschinellen Geschirrreinigern; in der Papier- und Zellstoffherstellung wie der Zellstoffbleiche, der Holzschliffbleiche und dem Deinking bei dem Altpapierrecycling; in der Metallvorbehandlung wie der Reinigung von Eisen, Stahl, Zink, Zinn, Aluminium, Kupfer, Messing und anderen Metallen zur Vermeidung von Niederschlägen aus Erdalkali- und Schwermetallphosphaten, -carbonaten, -silikaten, -seifen und unlöslicher Salze von anionischen Tensiden auf Apparateteilen und den zu reinigenden Oberflächen; in der Oberflächentechnik wie z. B. a) in galvanischen Bädern zur Verbesserung der Stabilität der Bäder und der Optimierung der an Anode und Kathode ablaufenden Reaktionen sowie b) der stromlosen, chemischen Verkupferung; in der Metallbearbeitung zur Herstellung von Emulsions- und Lösungskonzentraten wie z. B. Schmier- und Imprägniermitteln, Bohrölen, Ziehölemulsionen, wasserverdünnbaren und wasserlöslichen Metallbearbeitungshilfsmitteln, Hydrauliklösungen und -emulsionen; in der Textilveredlung in Verarbeitungs- und Veredlungsprozessen wie Abkochen, Beuchen, Bleichen, Färben und Hochveredeln der Gewebe; in der Lederherstellung zur vegetabilischen Gerbung insbesondere bei eisenhaltigem Wasser; in fotografischen Bädern, insbesondere hier zu Komplexierung von Ca²⁺, Fe²⁺ und Cu²⁺ wie z. B. a) in Entwicklerbädern zur Vermeidung von Niederschlägen von Calciumsulfit und Calciumsulfat, die auf den fotografischen Schichten zu einem Grauschleier führen und die Entwicklungsgeräte verunreinigen und b) in Bleich- und Bleichfixierbädern bei der Verarbeitung farbfotografischer Materialien, insbesondere Fe³⁺ - EDTA - Komplexe zur Durchführung von Bleichung und Fixierung in einem Prozessschritt; in kosmetischen Produkten (insbesondere EDTA) zum Maskieren von Schwermetallionen zur Vermeidung von Ranzigwerden und Verfärbungen; in Spurennährstoffdüngern (Mikronutrients), insbesondere EDTA, in Form der Komplexe mit wichtigen Spurenelementen wie Eisen, Mangan, Magnesium, Kupfer, Zink, Molybdän oder Kobalt für landwirtschaftliche Kulturen (z. B. im Wein-, Obst-, und Hopfenanbau) zur Retardierung der Versorgung mit Spurenelementen; in der Gewinnung und Verarbeitung von Kautschuk zum Schutz gegen Schwermetalle, insbesondere Kupfer- und Manganspuren, die als Verunreinigung schon im Rohkautschuk enthalten sind und durch Additive, z. B. Pigmente, zusätzlich eingebracht werden können und welche eine vorzeitige Alterung des Kautschuks bewirken; bei der Herstellung von Synthesekautschuk, insbesondere Butadien-Styrol-Mischpolymerisaten, als Bestandteil des Redox-Katalysator-Systems; in der Metallurgie z. B. als Metallstripper als Bestandteil von Entmetallisierungslösungen zum Abziehen misslungener Metallbeschichtungen (z . B. von Nickel) oder in Entrostungs- und Entzunderungsbädern; als Zusatz in Druckfarben, z. B. im Offsetdruck zur Vermeidung von Tonen und Aufbauen; in der Wasserbehandlung zur Vermeidung oder der Entfernung von Belägen aus Calciumsulfat, Calciumcarbonat oder Calciumphosphat in Boilern, Eindampfanlagen, Wärmetauschern oder an Filtern; in der Rauchgaswäsche, z. B. in Form von EDTA-Chelaten, zur Entfernung von NOx und SO₂ aus den Rauchgasen, z. B. mittels des sogenannten Simultanverfahrens; zur Entfernung von Belägen, insbesondere von Magnetit, in den Dampferzeugern von Wärmekraftwerken sowie in Heizungskreisläufen; in Lacken, besonders in wässrigen Anstrichfarben; in der Lebensmittelverarbeitung; in der pharmazeutischen Industrie; in feinchemischen Trennverfahren, z. B. zur Gewinnung von seltenen Erden; als Eluierungsmittel bei bestimmten Trennprozessen mit Hilfe von Ionenaustauschern und in vielen weiteren technischen Anwendungen.
Näheres zu den vorgenannten Anwendungsgebieten von Komplexbildnern ist in den Broschüren "Trilon® Komplexbildner" und "Technische Reinigungsmittel" der BASF enthalten.
Zu den als Komplexbildner eingesetzten Aminocarboxylaten gehören z. B. die Salze der folgenden Aminocarbonsäuren: Nitrilo-triessigsäure (NTA), Ethylendiamin-tetraessigsäure (EDTA), Diethylen-triamin-pentaessigsäure (DTPA), Hydroxyethyl-ethylendiamin-triessigsäure (HEDTA), Methylglycindiessigsäure (MGDA), Glutaminsäurediessigsäure (GLDA), 1,3-Propylendiamintetraessigsäure (PDTA), Ethylendiamin-N,N'-bis (2-hydroxyphenylessigsäure) (EDDHA), Hydroxyethyliminodiessigsäure (HEIDA), Iminodibernsteinsäure (IDS), Ethylenediamin-dibernsteinsäure (EDDS), β-Alanin-diessigsäure (β-ADA). Die Aminocarboxylate sind dabei als freie Aminocarbonsäure und voll- oder teilneutralisiert als Li-Salz, Na-Salz, als K-Salz, als Ammonium-Salz, als Mg-Salz, als Ca-Salz oder in der Form gemischter Salze, z. B. als Na-Ca-Salze im Handel. Ferner werden sie auch in Form ihrer Metallchelate, z. B. mit Cu²⁺, Mn²⁺, Zn²⁺, Fe²+, Fe³⁺, Cr³⁺ oder Co²⁺ in den Handel gebracht.
Zur Verwendung von Aminocarboxylaten in den vorstehend beschriebenen Anwendungsgebieten werden Aminocarboxylate als wässrige Lösung oder in fester Form, als Pulver, als Granulate oder Pellets angeboten.

GB 2 311 538 A, US 6 162 259 A und GB 2 311 535 A offenbaren Waschmittel, enthaltend Aminotricarboxylat, insbesondere MGDA, Kieselsäure und andere Hilfsstoffe.EP 0 053 246 A1 offenbart ein Mehrspurennährstoff-Düngemittel, enthaltend komplexbildenden Spurennährstoffelemente in Form von anionischen Chelatverbindungen mit einer oder mehreren N-Carboxyalkylaminosäuren und Magnesiumoxid.US 4 663 071 A offenbart ein Waschmittel, enthaltend EDTA, Fettsäuresalz, STPP und andere feste Hilfsstoffe. WO 2007/052004 A1 offenbart ein Maschinengeschirrspülmittel, enthaltend zu mindestens 20 Gew. % MGDA und/oder GLDA, 5-50 Gew. % Kieselsäure, 0.1-30 Gew. % Fettsäuresalz und andere feste Hilfsstoffe.
Wässrige Lösungen haben den Nachteil, dass sie nur mit relativ geringen Feststoffgehalten herstellbar sind, was die Transportkosten zum Kunden erhöht. Ferner benötigen sie zur Lagerhaltung beheizbare Tanks und entsprechende Systeme, um sie der jeweiligen technischen Anwendung zur Verfügung zu stellen, wie z. B. Pumpen, Rohrleitungen und Düsen, was einen nicht unerheblichen technischen Aufwand darstellt.
Die handelsüblich verfügbaren festen Formen der Aminocarboxylate wie Pulver, Granulate oder Pellets haben wiederum den Nachteil, dass sie stark hygroskopisch sind. Dies erschwert ihre Handhabung, besonders in klimatischen Zonen mit höherer Luftfeuchte, erheblich. Deshalb müssen oft kontrollierte klimatische Bedingungen geschaffen werden, was ebenfalls mit einem großen technischen Aufwand einhergeht. Auch müssen angebrochene Gebinde je nach Aminocarboxylat hermetisch wiederverschlossen werden, was bei Säcken oder Big Bags nicht möglich ist. Unabhängig von ihrer Hygroskopizität zeigen die Aminocarboxylate in Pulverform, bedingt durch hohe Kohäsionskräfte zwischen den Partikeln, auch ein sehr schlechtes Fließverhalten, welches die Förderung und exakte Dosierung z. B. in der Waschpulver-produktion erheblich erschwert. Schließlich zeigen die Produkte eine schlechte Lagerstabilität bei der mechanischen Einwirkung von Druck, wie er z. B. bei Stapelung von Big Bags auf die verpackten Produkte wirkt.

Die Aufgabe der vorliegenden Erfindung ist es daher, freie, teilneutralisierte oder vollneutralisierte Aminocarbonsäuren in der Form von Pulvern, Granulaten oder Pellets bereitzustellen, welche über eine gute physikalische Stabilität verfügen und die vom Anwender einfach zu lagern und zu verarbeiten sind.

Es wurde nun gefunden, dass dieses Ziel durch die Zugabe mindestens eines Additivs (B) zu dem in fester Form vorliegenden Aminocarboxylat (A) erreicht werden kann. Dabei kann Aminocarboxylat (A) in reiner Form oder als Mischung mit einem oder mehreren Hilfsstoffen (C) vorliegen, z. B. als Granulat oder Pellet, welches anschließend mit dem/ den Additiv(en) (B) behandelt werden kann.

Gegenstand der Erfindung ist daher eine pulver-, granulat- oder pelletförmig vorliegende Mischung, enthaltend ein oder mehrere Aminocarboxylat(e) (A) und Additiv(e) (B), gewählt aus pyrogenen Kieselsäuren und Fällungskieselsäuren, wobei das Gewichtsverhältnis von Aminocarboxylat(en) (A) zu Additiv(en) (B) insgesamt im Bereich von 95:5 bis 999:1 liegt. Gegebenenfalls können erfindungsgemäße Mischungen
(C) bis zu 50 Gew.-% festen Hilfsstoff
enthalten, bezogen auf Summe von Aminocarboxylat(en) (A) und Additiv (B).

Im Sinne dieser Anmeldung haben pulverförmige Stoffe einen Teilchendurchmesser von mindestens 1 µm bis maximal 0,1 mm, granulatförmige Stoffe einen Teilchendurchmesser von mindestens 0,1 mm bis maximal 2 mm und pelletförmige Stoffe einen Teilchendurchmesser von mindestens 2 mm bis maximal 5 mm (jeweils bestimmt durch Siebanalyse).
Als Aminocarboxylate (A) können die folgenden Aminocarbonsäuren zur Verwendung kommen: Ethylendiamin-di-(o-hydroxyphenyl) essigsäure (EDDHA) ; Ethylendiamin-N-(o-hydroxyphenyl)essigsäure-N'-(p-hydroxyphenyl)essigsäure (EDDHA), 2-Hydroxyethylendiamintriessigsäure (HEEDTA), Ethylendiamin-di-(o-hydroxy-o-methylphenyl)essigsäure (EDDHMA), Ethylendiamin-di-(o-hydroxy-p-methylphenyl)essigsäure (EDDHMA), Ethylendiamin-di-(p-hydroxy-o-methylphenyl)essigsäure (EDDHMA), Ethylendiamin-di-(2-hydroxy-4-carboxyphenyl)essigsäure (EDDCHA), Ethylendiamin-di-(2-carboxy-5-hydroxyphenyl)essigsäure (EDDCHA), Ethylendiamin-di-(5-carboxy-2-hydroxyphenyl)essigsäure (EDDCHA) ; oder bevorzugt Nitrilo-triessigsäure (NTA), Ethylendiamin-tetraessigsäure (EDTA), Diethylen-triamin-pentaessigsäure (DTPA), Hydroxyethyl-ethylendiamin-triessigsäure (HEDTA), Methylglycindiessigsäure (MGDA), Glutaminsäurediessigsäure (GLDA), 1,3-Propylendiamintetraessigsäure (PDTA), Ethylendiamin-N,N'-bis (2-hydroxyphenylessigsäure) (EDDHA), Hydroxyethyliminodiessigsäure (HEIDA), Iminodibernsteinsäure (IDS), Ethylendiamindibernsteinsäure (EDDS), β-Alanin-diessigsäure (β-ADA).

Aminocarboxylate (A) können dabei als freie Aminocarbonsäuren oder voll- oder teilneutralisiert als Na-Salz, als K-Salz, als Ba-Salz, als Li-Salz, als Ammonium-Salz, als Mg-Salz, als Ca-Salz oder in der Form beliebig gemischter Salze, wie z. B. als Na-Ca-Salze, eingesetzt werden. Der Begriff Ammoniumsalz umfasst hierbei Salze von Aminocarbonsäuren mit Ammoniak oder mit primären, sekundären oder tertiären Aminen R-NH₂, R¹-NH-R² und NR¹R²R³ mit R, R¹, R², R³ unabhängig voneinander C₁- bis C₁₈-Alkyl, Benzyl-, Ethylphenyl-, Cyclohexyl- oder Phenyl.

Aminocarboxylat (A) kann auch in Form seines Metallchelats, z. B. mit Al³⁺, Cr³⁺, Co²⁺, Cu²⁺, Fe²⁺, Fe³⁺, Mn²⁺, Ni²⁺, Sr²⁺, Zn²⁺, Sn²⁺ in den erfindungsgemäßen Mischungen vorliegen.

Additive (B) sind gewählt aus pyrogenen Kieselsäuren und Fällungskieselsäuren. Pyrogene Kieselsäuren werden durch Hochtemperaturflammenhydrolyse von Siliciumtetrachlorid in der Knallgasflamme erhalten. Fällungskieselsäuren werden nasschemisch aus Alkalisilikatlösungen durch Zusatz von Säuren erhalten. Dabei sind die pyrogenen Kieselsäuren wie die Fällungskieselsäuren nicht kristallin, sondern von amorpher Struktur.

Beispiele für pyrogene Kieselsäuren sind die Aerosil-Marken® (Fa. Evonik), insbesondere Aerosil® 200. Beispiele für Fällungskieselsäuren sind die Sipernat-Marken® (Fa. Evonik), insbesondere Sipernat® 320, Sipernat® 320 DS, Sipernat® 360, Sipernat® 500 LS, Sipernat® 2200, Sipernat® 22, Sipernat® 22 S, Sipernat® 22 LS, Sipernat® 50, Sipernat® 50 S, Sipernat® C 600, Sipernat® C 630, Sipernat® 820 A und Sipernat® 880.

In erfindungsgemäßen Mischungen können die vorgenannten hydrophilen Kieselsäuren oder auch hydrophob modifizierte Kieselsäuren eingesetzt werden. Hydrophobe Kieselsäuren sind beispielsweise Sipernat® D 10, Sipernat® D 17 und Aerosil® R 812 und R 972. Hydrophob modifizierte, Fällungskieselsäuren und hydrophob modifizierte pyrogene Kieselsäuren sind ganz besonders bevorzugte Additive.

Hydrophob modifizierte Kieselsäuren sind erhältlich durch Nachbehandlung von Kieselsäuren mit Nachbehandlungsagenzien wie Silanen, beispielsweise Trimethylchlorsilan oder Dimethyldichlorsilan, oder mit Siloxanen. In hydrophob modifizierten Kieselsäuren ist das Nachbehandlungsagenz mit der Kieselsäure über eine chemische Bindung verbunden.

In einer Ausführungsform der vorliegenden Erfindung wählt man Additiv (B) aus Kieselsäuren mit einer spezifischen Oberfläche (BET) im Bereich von 30 bis 800 m²/g.

Bevorzugte Fällungskieselsäuren zeichnen sich durch eine spezifische Oberfläche von 25 bis 800 m²/g, bevorzugt 30 - 500 m²/g, besonders bevorzugt von 150 - 450 m²/g aus (Areameter-Methode ISO 5794-1, Annex D). Hydrophob modifizierte Fällungskieselsäuren besitzen eine spezifische Oberfläche von bevorzugt 75-125 m²/g, Areameter-Methode ISO 5794-1, Annex D.

In einer Ausführungsform der vorliegenden Erfindung liegt die Stampfdichte von eingesetzten Fällungskieselsäuren im Bereich von 50 - 300 g/l, bevorzugt bei 75 - 200 g/l und ganz besonders bevorzugt bei 90 - 150 g/l (Bestimmung nach DIN ISO 787/11).

Im Falle der Fällungskieselsäuren hat Additiv (B) bevorzugt einen mittleren Durchmesser im Bereich von 1 bis 200 µm, bevorzugt 5 bis 150 µm, besonders bevorzugt 6 bis 120 µm und ganz besonders bevorzugt von 8 bis 20 µm (d50), jeweils bestimmt durch Lichtstreuung gemäß ISO13320-1.

Additiv (B) in Form von pyrogenen Kieselsäuren hat bevorzugt eine spezifische Oberfläche im Bereich von 100 bis 400 m²/g und mittlere Teilchendurchmesser von 1 nm - 50 nm, bezogen auf die Primärpartikel. Die Primärpartikel können miteinander verwachsen vorliegen und Aggregate oder Agglomerate bilden. Die Stampfdichte liegt bei ca. 50 bis 150 g/l. In einer Ausführungsform der vorliegenden Erfindung wählt man hydrophob modifizierte pyrogene Kieselsäuren mit einer spezifische Oberfläche im Bereich von 100 bis 400 m²/g und einem mittleren Teilchendurchmesser von 1 nm bis 50 nm.

Die beschriebenen Kieselsäuren können, Metallionen wie Ca²⁺, Mg²⁺, Al³⁺ oder Fe³⁺ in sehr geringen Mengen enthalten, also jeweils < 6, bevorzugt < 5 Gew.-%, vorzugsweise kleiner 3 Gew.-%, besonders bevorzugt kleiner 2 Gew.-% und besonders bevorzugt kleiner 1,5 Gew.-% bezogen auf das Gesamtgewicht der jeweiligen Kieselsäure und bestimmt als Oxid. In einer Ausführungsform kann mindestens je 0,001 Gew.-% der vorstehend genannten Metallionen, bezogen auf das Gesamtgewicht der jeweiligen Kieselsäure und bestimmt als Oxid, enthalten sein. In Ausführungsformen, in denen Additiv (B) aus pyrogenen Kieselsäuren gewählt wird, liegt der Gehalt an Metallionen wie Ca²⁺, Mg²⁺, Al³⁺ oder Fe³⁺, bei max. 0,05 Gew.-%, bezogen auf das Gesamtgewicht der jeweiligen Kieselsäure und bestimmt als Oxid, und im Falle der Fällungskieselsäuren bei max. 1 Gew.-% (geglühte Substanz, 2 Std. bei 1000°C). Diese stellen keinen erforderlichen bzw. geeigneten Bestandteil der Kieselsäure, sondern produktionstechnisch gegebene Verunreinigungen dar. So liegt z. B. der Na-Gehalt, bestimmt als Na₂O (ISO 3262-18), bei < 1,5 Gew.-%. Kristalline Silikate, Schichtsilikate und Zeolithe gehören nicht zu den bevorzugten Additiven (B).

Bevorzugte Metallseifen haben einen Partikeldurchmesser (d50) im Bereich von 1 µm bis 100 µm, bevorzugt von 5 µm bis 50 µm, bezogen auf die Primärteilchen. Aufgrund von Kohäsionskräften können diese Aggregate oder Agglomerate bilden.

Das Additiv (B) hat die Aufgabe, das Primärkorn des Aminocarboxylats (A)/ der (Aminocarboxylate zumindest partiell zu umhüllen oder zumindest partiell zu bedecken.

In einer Ausführungsform können das bzw. die Aminocarboxylate (A) in der Form von Pulvern, Granulaten oder Pellets in Mischung mit mindestens einem festen Hilfsstoff (C) vorliegen, wobei im Falle der Pulver, Granulate oder Pellets die vorliegenden Partikel dann selbst eine mit bloßem Auge oder auch lichtmikroskopisch homogen aussehende Mischung aus Aminocarboxylat(en) (A) und Hilfsstoff (C) darstellen und der Hilfsstoff im Gegensatz zu Additiv das Primärkorn nicht vollständig oder vorzugsweise partiell umhüllt. Es kann aber auch eine vollständige Bedeckung des Granulatkorns bzw. des Pelletteilchens bestehend aus Aminocarboxylat(en) (A) mit einer Schicht aus dem/ den Hilfsstoff(en) (C) vorliegen. Unter einer vollständigen Bedeckung (Coating) ist hier eine zusammenhängende Schicht aus Hilfsstoff(en) (C) auf dem/ den Aminocarboxylaten (A) gemeint und keine partielle Bedeckung, wie vorzugsweise für das Additiv (B) beschrieben.
Hilfsstoff (C) kann dabei anorganischer oder organischer Natur sein und ist durch einen Schmelzpunkt > 20°C gekennzeichnet.
Anorganische Hilfsstoffe (C) können z. B. aus der Gruppe der Waschmittelbuilder oder Waschmittelgerüststoffe gewählt werden. Diese umfassen insbesondere Zeolithe mit der Formel Na_{z}[(AlO₂)_{z}(SiO₂)_{y}]·xH₂O, worin z und y ganze Zahlen von mindestens 6 bedeuten, das Verhältnis von z zu y zwischen 1,0 bis etwa 0,5 liegt, und x eine ganze Zahl von 15 bis 264 bedeutet. Diese Zeolithe können von kristalliner oder amorpher Struktur sein, und können natürlich vorkommend oder auch synthetisch hergestellt sein. Verfahren für die Herstellung von Ionentauschern auf Aluminosilikatbasis werden beschrieben in US-3,985,669 und US-4,605,509. Besonders bevorzugt sind synthetische, kristalline Aluminosilikate, wie Zeolith A, Zeolith P(B) und Zeolith X. Ferner können als Hilfsstoff Alkalimetallsilikate, insbesondere diejenigen mit einem SiO₂:Na₂O-Verhältnis zwischen 1,6:1 und 3,2:1 sowie Schichtsilikate, beispielsweise Natriumschichtsilikate, wie beschrieben in US-4,664,839, z. B. SKS 6® (Clariant) eingesetzt werden, Bentonite, z. B. Laundrosil® DGA (Südchemie), und Kaolin. Geeignet sind weiterhin amorphe Natriumsilikate mit einem Verhältnis von SiO₂ zu Na₂O = 1:1 bis 4:1, insbesondere von 1,6:1 bis 3,2:1 und die z.B. Na-Orthosilikat, Na-Metasilikat, Dinatriumdisilikat und Dinatriumtrisilikat umfassen, weiterhin kristalline Natriumschichtsilikate wie Kanemit, Makatit, Magadit, Kenyait, Natrosilit und insbesondere das delta-Disilikat (SKS-6^{®}, Fa. Clariant).
Geeignet sind ferner Carbonate, wie Na₂CO₃ und K₂CO₃, Hydrogencarbonate, wie NaHCO₃ und KHCO₃, Phosphate, insbesondere Pentanatriumtriphosphat (Hauptbestandteil des Natriumtripolyphosphats), Natriumdiphosphat (Natriumpyrophosphat) und Natriumorthophosphat.

Besonders bevorzugte organische Hilfsstoffe (C) können z. B.gewählt werden aus C₁₂-C₂₂-Fettsäuren, bevorzugt Stearinsäure, bei Zimmertemperatur feste Polyalkylenglykole, insbesondere Polyethylenglykole, mit Molmassen von 10.000 bis 35.000 g/ mol, Polycarbonsäuren mit Molmassen von 4000 g/ mol bis 20.000 g/ mol in teilneutralisierter Form, z.B. Sokalan® PA 25 CL PN und Sokalan® PA 30 CL PN, und Talgfettalkohol-ethoxylate mit 20 bis 80 mol Ethylenoxid pro mol Talgfettalkohol. Der Einsatz eines Hilfsstoffes (C) wird dann bevorzugt, wenn Aminocarboxylat (A) in granulierter oder pelletisierter Form vorliegen soll. Jedoch können Granulate und Pellets durchaus auch ohne den Einsatz eines Hilfsstoffes (C) hergestellt werden.

Das Gewichtsverhältnis von Aminocarboxylat(en) (A) zu Additiv(en) (B) liegt insgesamt im Bereich von 95:5 bis 999:1, besonders bevorzugt im Bereich von 97:3 bis 998:2 und ganz besonders bevorzugt im Bereich von 98:2 bis 995:5.

In einer Ausführungsform der vorliegenden Erfindung kann erfindungsgemäße Mischung bis zu 50 Gew.-% Hilfsstoff (C), bezogen auf Summe von Aminocarboxylat(en) (A) und Additive(en) (B) enthalten, bevorzugt 5 bis 30 Gew.-%, besonders bevorzugt 10 bis 20 Gew.-%.

Hilfsstoff(e) (C) kann/können in Granulatkorn bzw. Pellet eine kontinuierliche Phase bilden, in welcher Aminocarboxylat (A) homogen verteilt eingebettet vorliegt, oder auf dem Granulat oder Pellet bestehend aus Aminocarboxylat(en) (A) eine Hülle (Coating) bilden.

Soll die Mischung Aminocarboxylat(e) mit Hilfsstoff(en) (A+C) und Additiv(en) (B) in Waschmitteln für Textilien eingesetzt werden, so sind als organische Hilfsstoffe (C) Fettsäuren und Polycarboxylate bevorzugt.

Soll die Mischung Aminocarboxylat(e) mit Hilfsstoff(en) (A+C) und Additiv(en) (B) in Reinigungsmitteln für maschinelle Geschirrreinigung eingesetzt werden, so sind als organische Hilfsstoffe (C) besonders die schwach oder nichtschäumende Stoffe bevorzugt, insbesondere Polyalkylenglykole, nichtionischen Tenside und Wachse mit einem Schmelzbereich von je 40°C bis 60°C, sowie Polycarboxylate.

Granulat (A+C), bestehend aus Aminocarboxylat(en) (A) und Hilfsstoff(en) (C), kann beispielsweise wie folgt hergestellt werden:
(a) nach dem Sprühmischverfahren, indem man das/ die Aminocarboxylate (A) in Granulatform oder als Pellet in einem Mischer (z.B. Pflugscharmischer, Ringschichtmischer, Schugi-Mischer) vorlegt und mit (I) einer Schmelze oder (II) einer Lösung des Hilfsstoffes (C) beispielsweise in einem organischen Lösungsmittel besprüht. Mit diesem Verfahren erhält man ein Granulat (A+C) oder ein Pellet (A+C) bei dem (A) mit einer Hülle (C) umgeben ist. Anschließend kann das Zumischen von Additiv (B) erfolgen.
   Für das Aufsprühen als (I) Schmelze sind Hilfsstoffe mit einem Schmelzpunkt zwischen 30°C und 100°C bevorzugt. Dazu gehören die organischen Hilfsstoffe, insbesondere Fettsäuren, wie Stearinsäure, Polyalkylenglykole, Silikone und nichtionische Tenside. Die Aufbringung als (II) Lösung wird vorzugsweise bei anorganischen Hilfsstoffen (C), aber auch im Falle der Polycarbonsäuren und ihrer Salze erfolgen. Dabei muss auf eine ausreichend schnelle Verdampfung des Wassers geachtet werden, da die Aminocarboxylate selbst gut wasserlösliche Stoffe darstellen. Ein Aufsprühen (II) des Hilfsstoffes (C) in einem organischen Lösemittel ist dann bevorzugt, wenn dieser hydrophob ist, einen Schmelzbereich > 100°C besitzt und unter Inertgas (Stickstoffatmosphäre) gearbeitet werden kann. Beispiele hierfür sind die beschriebenen kationischen Tenside die in isopropanolischer Zubereitung in den Handel gebracht werden.
(b) über eine Kompaktierung mit anschließender Mahlung und Siebung. Dazu wird im ersten Schritt in einem Mischer (z. B. Pflugscharmischer) das/ die Aminocarboxylat(e) (A) und der/ die Hilfsstoff(e) (C) homogen vermischt. In einem zweiten Schritt wird die Mischung (A+C) mittels eines Walzenkompaktors verpresst. Die Presslinge werden anschließend zerkleinert/ gemahlen und der gewünschte Korngrößenbereich selektiert. Dazu eignen sich Zahnscheibenwalzen und / oder Passiersiebe. Feinanteil und Grobgut werden abgesiebt und in den Prozess zurückgeführt. Dabei wird Grobanteil direkt einer erneuten Zerkleinerung zugeführt und der Feinanteil der Kompaktierstufe zugesetzt. Mit diesem Verfahren erhält man ein Granulat (Kompaktat) (A+C) bei welchem Aminocarboxylat(e) (A) und Hilfsstoff(e) (C) einen homogenen Verband bilden. Derartige Granulate zeichnen sich durch ein Schüttgewicht von größer 500 g/Liter, vorzugsweise von größer 600 g/ Liter aus.
(c) als Sprühgranulierung in einer Wirbelschichtapparatur. Dazu wird eine vorzugsweise wässrige Lösung aus Aminocarboxylat(en) (A) und Hilfsstoff(en) (C) auf ein pneumatisch erzeugtes Wirbelbett aus vorgelegtem Granulat (A+C) aufgesprüht, das Wasser verdampft und kontinuierlich das Granulat ausgetragen. Mit diesem Verfahren erhält man ein Granulat (Kompaktat) (A+C) bei welchem Aminocarboxylat(e) (A) und Hilfsstoff(e) (C) einen homogenen Verband bilden.
(d) in einen Sprühturm. Dazu wird eine vorzugsweise wässrige Lösung aus Aminocarboxylat(en) (A) und Hilfsstoff(en) (C) in einen Heißluftstrom gesprüht und das Lösemittel, vorzugsweise das Wasser verdampft. Man erhält hierbei ein homogen aussehendes Pulver aus Aminocarboxylat(e) (A) und Hilfsstoff(e) (C).
(e) in einer Wirbelschichtapparatur zum Zwecke des Coatings. Dazu wird entweder eine (vorzugsweise wässrige) Lösung oder eine Schmelze aus Hilfsstoff(e) (C) auf ein pneumatisch erzeugtes Wirbelbett aus Aminocarboxylat(en) (A) in Granulatform oder Pelletform aufgesprüht, wobei (A) von (C) vollständig umhüllt wird. Beim Aufsprühen wässriger Lösungen ist eine ausreichend schnelle Verdampfung des Wassers zu gewährleisten. Beim Aufsprühen einer Schmelze kann eine Temperung vorteilhaft sein. Darunter versteht man eine Wärmebehandlung des Feststoffes in der Wirbelschicht mittels des verwendeten Gases (Luft), gleich oder unterhalb der Schmelz- oder Erweichungstemperatur des jeweiligen Hilfsstoffes (C). Bevorzugt arbeitet man bei einer Temperatur, die knapp unterhalb der Schmelz- oder Erweichungstemperatur des Hilfsstoffes (C) liegt.

In einer bevorzugten Ausführungsform der vorliegenden Erfindung enthält erfindungsgemäße Mischung weder Sulfat noch Citrat. Darunter ist zu verstehen, dass der maximale Gehalt von Citrat und Sulfat insgesamt unter 500 ppm liegt, bezogen auf Aminocarboxylat(e) (A), bevorzugt insgesamt unter 50 ppm.

Ein weiterer Gegenstand der vorliegenden Erfindung ist ein Verfahren zur Herstellung von erfindungsgemäßen Mischungen. Die Herstellung von erfindungsgemäßen Mischungen erfolgt vorzugsweise durch Mischen von als Pulver, Granulat oder Pellet vorliegenden Aminocarboxylat(en) (A) oder einer aus Aminocarboxylat(en) (A) und Hilfsstoff (C) bestehenden pulver-, granulat-, oder pelletförmigen Mischung mit Additiven (B).

Dabei liegt die übliche Partikelgröße des Aminocarboxylat (A) enthaltenden Primärkorns im Bereich 10 bis 2500 µm, vorzugsweise 20 bis 1500 µm, besonders bevorzugt von 50 bis 1000 µm und ganz besonders bevorzugt von 100 bis 700 µm.

Unter "feinteilig" in Bezug auf das Additiv (B) werden mittlere Teilchendurchmesser von 1 nm bis 500 µm (als (d50)-Wert, bestimmt durch Lichtstreuung gemäß ISO13320-1) verstanden, bevorzugt 1 nm bis 200 µm. Bezogen auf Fällungskieselsäuren liegt der mittlere Teilchengrößendurchmesser bevorzugt bei 1 µm bis 200 µm und im Falle der pyrogenen Kieselsäuren bevorzugt bei 1 nm - 50 nm.

Der Mischvorgang kann dabei in den üblichen Mischaggregaten, wie z. B. Trommelmischer, V-Blender, Taumel- oder Turbula Mischer, Konus-Mischer (z. B. Nauta-Mischer), PflugscharMischer (Lödige-Mischer, Eirich-Mischer) erfolgen. In einer bevorzugten Ausführungsform erfolgt der Mischprozess in Mischern, die geringe Scherkräfte auf das Mischgut ausüben, wie z. B. Taumelmischer, Konus-Mischer und Pflugscharmischer.

Vorzugsweise wird das Aminocarboxylat (A) oder der Aminocarboxylat-Compound (A+C) vorgelegt, dann das Additiv (B) zugegeben und anschließend gemischt. Um eine schonende Mischung zu gewährleisten, wird mit möglichst kurzen Mischzeiten gearbeitet. So ist z. B. für die Herstellung von 100 g der erfindungsgemäßen Mischung in einem Turbula-Mischer eine Mischzeit von 3 Minuten vollkommen ausreichend.

Wenn die Aminocarboxylate (A) oder die Aminocarboxylat-Compounds (A+C) in Pulverform über eine Sprühtrocknung hergestellt werden, dann wird das Additiv (B) vorteilhaft separat von der wässrigen Lösung des Aminocarboxylats (A) oder dessen Compound (A+C) direkt in den Sprühturm eindosiert. Mögliche Stellen zur Zudosierung sind das obere Ende des Sprühtrockners, ein Dosieranschluss über ein Schauglas oder die Zudosierung über den Heißluftstrom. Gleiches gilt prinzipiell für eine Sprühgranulierung.

Ist eine Zudosierung des Additivs in den Sprühturm nicht möglich, so kann es in einem separaten Mischaggregat, wie zuvor beschrieben, zudosiert werden.

Sollte das dem Aminocarboxylat enthaltenden Primärkorn (A) zuzumischende Additiv (B) nicht ausreichend feinteilig sein, so z. B. nur als durch Erhitzen geschmolzene und nach Abfüllen in Fässer erstarrte Ware verfügbar sein, so kann das Aminocarboxylat (A) enthaltende Primärkorn zusammen mit dem Additiv (B) vermahlen werden, wobei ebenfalls eine Durchmischung der Komponenten gewährleistet wird. Dieses wird insbesondere dann eine bevorzugte Verfahrensweise sein, wenn das Aminocarboxylat ohne oder mit Zusatz eines Hilfsstoffes (C) mittels einer Kompaktierung zunächst zu Platten oder Schollen verpresst wird, die anschließend ohnehin über eine Mahlung in eine feinteilige Form gebracht werden müssen. Für diesen Verfahrensschritt eignen sich prinzipiell alle Mahlapparate, wie z. B. Prallmühlen und Schneidmühlen.

Die Einsatzkonzentration der erfindungsgemäßen Mischung enthaltend Aminocarboxylat (A) oder Aminocarboxylat-haltigen Compound (A+C) und Additiv (B) in Wasch- und Reinigungsmitteln beträgt bezogen auf das Aminocarboxylat (A) 0,1 bis 90 Gew.-%, bevorzugt zwischen 1 und 50 Gew.-% , besonders bevorzugt zwischen 3 und 40 Gew.-%, ganz besonders bevorzugt zwischen 6 und 30 Gew.-% sowie speziell bevorzugt zwischen 10 und 25 Gew.-%.

Die Wasch- und Reinigungsmittelformulierungen, in denen die erfindungsgemäßen Mischungen eingesetzt werden können, sind bevorzugt feste Waschmittel, die als Pulver, Granulate, Pellets, Tabletten oder als Waschstücke ("Bar Soaps") vorliegen. Darüber hinaus können sie aber auch in Flüssigwaschmitteln, Waschgelen und Waschpasten eingearbeitet werden. Dies wird bevorzugt dann der Fall sein, wenn aufgrund langer Transportwege zum Verwender das betreffende Aminocarboxylat möglichst hoch konzentriert und somit nicht als wässrige Lösung bezogen werden wird und auf dem Transportweg (z. B. mit dem Schiff) das Produkt vor einer Verbackung durch Feuchtigkeitsaufnahme besser geschützt werden soll.

Wasch- und Reinigungsmittel, welche erfindungsgemäße Mischung enthalten, können darüber hinaus weitere übliche Bestandteile enthalten. Diese werden im Folgenden beschrieben:

### Anionische Tenside

Als anionische Tenside kommen bevorzugt Alkylbenzolsulfonate, Alkansulfonate, Olefinsulfonate, Alkylestersulfonate, Alkylsulfate, Alkylethersulfate, Alkylcarboxylate (Seifen) und Alkylphosphate in Betracht. Geeignete Gegenionen M sind Alkalimetallkationen, bevorzugt Natrium oder Kalium, oder ein halbes Äquivalent Erdalkalimetallkationen, z.B. ein halbes Äquivalent Calcium oder ein halbes Äquivalent Magnesium, oder Ammonium NH₄⁺ und substituierte Ammoniumkationen, wie z.B. Mono-, Di- oder Triethanolammoniumkationen, und Mischungen der vorgenannten Kationen daraus.

Alkenyl- oder Alkylbenzolsulfonate können eine verzweigte oder lineare, ggf. mit einer Hydroxylgruppe substituierte Alkenyl- oder Alkylgruppe enthalten. Bevorzugt enthalten sind lineare Alkylketten mit 9 bis 25 Kohlenstoffatomen und besonders bevorzugt mit 10 bis ca. 13 Kohlenstoffatomen.

Alkansulfonate sind großtechnisch in Form sekundärer Alkansulfonate verfügbar, bei denen die Sulfogruppe an einem sekundären Kohlenstoffatom des Alkylrestes gebunden ist. Die Alkylgruppe kann prinzipiell gesättigt, ungesättigt, verzweigt oder linear und gegebenenfalls mit einer Hydroxylgruppe substituiert sein. Die bevorzugten sekundären Alkansulfonate enthalten lineare C₉ bis C₂₅ - Alkylreste, bevorzugt C₁₀- bis C₂₀-Alkylreste und besonders bevorzugt C₁₃-bis C₁₇-Alkylreste.

Olefinsulfonate werden durch Sulfonierung von C₈- bis C₂₄-, vorzugsweise C₁₄- bis C₁₆-α-Olefinen mit Schwefeltrioxid und anschließende Neutralisation erhalten. Bedingt durch das Herstellverfahren, können diese Olefinsulfonate kleinere Mengen an Hydroxy-alkansulfonaten und Alkandisulfonaten enthalten.

Alkylestersulfonate leiten sich z. B. von linearen Estern von C₈ bis C₂₀-Carbonsäuren, also Fettsäuren, ab, die mit Schwefeltrioxid sulfoniert werden. Die Fettsäuren werden aus natürlichen Fetten, wie z.B. Talg, Kokosöl und Palmöl, erhalten oder können von synthetischer Natur sein. Für Wasch- und Reinigungsmittelanwendungen, sind Verbindungen der Formel (1) bevorzugt.

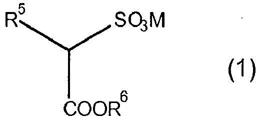

Dabei ist R⁵ ein C₈-C₂₀-Alkylrest, bevorzugt C₁₀-C₁₆-Alkyl und R⁶ ein C₁ bis C₆-Alkylrest, bevorzugt eine Methyl-, Ethyl- oder eine Isopropylgruppe. Besonders bevorzugt sind Methylestersulfonate mit R¹ C₁₀-C₁₆-Alkyl. M ist wie vorstehen definiert.

Geeignete Alkylsulfate sind Tenside der Formel R⁷OSO₃M, worin R⁷ gewählt aus C₁₀-C₂₄-Alkyl und bevorzugt aus C₁₂-C₁₈-Alkyl ist. M ist wie vorstehend definiert.

Geeignete Alkylethersulfate haben die allgemeine Struktur R⁸O(A)ₘSO₃M, worin R⁸ aus C₁₀-C₂₄-Alkyl- und bevorzugt C₁₂-C₁₈ Alkylrest gewählt ist. A ist eine Alkyoxyeinheit, bevorzugt Ethoxy-, und m ein Wert im Bereich von ca. 0,5 bis ca. 6, bevorzugt im Bereich von ca. 1 und ca. 3 ist und M ist wie vorstehend definiert.

Alkylcarboxylate sind allgemein unter dem Namen "Seifen" bekannt. Seifen können auf Basis gesättigter oder ungesättigter, bevorzugt nativer, linearer C₈ bis C₁₈-Fettsäuren hergestellt sein.

Weitere anionische Tenside sind Salze von Acylaminocarbonsäuren, Acylsarcosinate, Fettsäure-Eiweiß-Kondensationsprodukte, die durch Umsetzung von Fettsäure-chloriden mit Oligopeptiden erhalten werden; Salze von Alkylsulfamidocarbonsäuren; Salze von Alkyl- und Alkylarylethercarbonsäuren; sulfonierte Polycarboxylsäuren, Alkyl- und Alkenylglycerinsulfate wie O-leylglycerin-sulfate, Alkylphenolethersulfate, Alkylphosphate, Alkyletherphosphate, Isethionate, wie Acylisethionate, N-Acyltauride, Alkylsuccinate, Sulfosuccinate, Monoester der Sulfosuccinate (besonders gesättigte und ungesättigte Mono-C₁₂-C₁₈-Alkylester) und Diester der Sulfosuccinate (besonders gesättigte und ungesättigte Di-C₁₂-C₁₈-Alkylester), Sulfate von Alkylpolysacchariden wie Sulfate von Alkylpoly-glycosiden und Alkylpolyethoxycarboxylate wie die der Formel R⁹O(CH₂CH₂)ₖCH₂COOM, worin R⁹ aus C₈ bis C₂₂-Alkyl, k eine Zahl von 0 bis 10 gewählt und M⁺ wie vorstehend definiert ist.

### Nichtionische Tenside

Nach dem Typ der hydrophoben und der hydrophilen Basis unterscheidet man:

Additionsprodukte von Alkoholen und Ethylenoxid. Die Alkohole haben eine C₈-C₂₂-Alkylgruppe, bevorzugt eine C₁₀-C₁₈-Alkylgruppe, die linear oder verzweigt, primär oder sekundär sein kann. Diese werden mit ca. 1 mol bis ca. 25 mol, bevorzugt mit ca. 3 mol bis ca. 18 mol Ethylenoxid pro mol Alkohol kondensiert.

Additionsprodukte von Alkoholen und Ethylenoxid und einem weiteren Alkylenoxid. Diese können nach dem Schema R¹⁰-O-EO-AO oder R¹⁰-O-AO-EO aufgebaut sein, wobei R¹⁰ eine primäre oder sekundäre, verzweigte oder lineare C₈ bis C₂₂-Alkylgruppe, bevorzugt eine C₁₀ bis C₁₈-Alkylgruppe sein kann, EO für Ethylenoxid steht und es sich bei AO um ein Alkylenoxid, bevorzugt Propylenoxid, Butylenoxid oder Pentylenoxid handelt.

Additionsprodukte von Polypropylenglykol und Ethylenoxid. Der Baustein Polypropylenglykol weist bevorzugt ein Molekulargewicht M_{w} zwischen ca. 1500 und ca. 1800 g/mol auf. Die Anlagerung von bis zu ca. 40 mol Ethylenoxid an diesen hydrophoben Teil führt zu amphiphilen Verbindungen..

Additionsprodukte von Ethylenoxid und einem Reaktionsprodukt aus Propylenoxid und Ethylendiamin. Der hydrophobe Teil dieser Verbindungen besteht aus dem Reaktionsprodukt von Ethylendiamin und Propylenoxid und weist im Allgemeinen ein Molekulargewicht M_{w} von ca. 2500 bis 3000 g/mol auf. An diesen hydrophobe Teil wird Ethylenoxid bis zu einem Gehalt von ca. 40 bis ca. 80 Gew.-% Polyoxyethylen und einem gesamten Molekulargewicht M_{w} von ca. 5000 bis 11000 addiert.

### Fettsäureamide

Geeignete Fettsäureamide besitzen die allgemeine Formel R¹¹-CO-N(R¹²)₂, worin R¹¹ ein Alkylrest mit 7 bis 21, bevorzugt 9 bis 17 Kohlenstoffatomen ist.
Die beiden Alkylreste R¹² können gleich oder verschieden und unabhängig voneinander Wasserstoff, C₁-C₄-Alkyl, C₁-C₄-Hydroxyalkyl oder (C₂H₄O)ₓH sein, wobei x im Bereich von 1 bis 3 gewählt wird. Bevorzugt sind C₈-C₂₀-Amide als Monoethanolamide, Diethanolamide und Diisopropanolamide.

### Semipolare nichtionische Tenside

Zu den nichtionischen Tensiden zählen im Rahmen der vorliegenden Erfindung auch wasserlösliche Aminoxide, wasserlösliche Phosphinoxide und wasserlösliche Sulfoxide, mit mindestens einem C₈- C₁₈-Alkylrest, bevorzugt einem C₁₀ bis C₁₄- Alkylrest, der dem betreffenden nichtionischen Tensid den amphiphilen Charakter verleiht. Bevorzugt werden in Wasch- und Reinigungsmitteln C₁₀-C₁₈-Alkyldimethylaminoxide und C₈-C₁₂-Alkoxyethyl-dihydroxyethyl-aminoxide eingesetzt.

Weitere geeignete nichtionische Tenside sind Alkyl- und Alkenyloligoglycoside sowie Fettsäurepolyglykolester oder Fettaminpolyglykolester mit jeweils 8 bis 20, vorzugsweise 12 bis 18 C-Atomen im Fettalkylrest, und Fettsäure-N-alkylglucamide,

### Zwitterionische Tenside

Typische Beispiele für amphotere bzw. zwitterionische Tenside sind Alkylbetaine, Alkylamidbetaine, Aminopropionate, Aminoglycinate und amphotere Imidazolinium-Verbindungen. Besonders bevorzugt sind N-Alkyl-N,N-dimethyl-N-carboxymethylbetaine, sowie N-(Alkyl-amidopropyl-)-N,N-dimethyl-N-carboxymethylbetaine, sowie Alkyldipolyethoxybetaine, jeweils mit einem linearen oder verzweigten Alkylrest von 8 bis 22 Kohlenstoffatomen, bevorzugt 8 bis 18 Kohlenstoffatomen und besonders bevorzugt mit ca. 12 bis ca. 18 Kohlenstoffatomen.

### Kationische Tenside

Beispiele für kationische Tenside sind substituierte oder unsubstituierte geradkettige oder verzweigte quartäre Ammoniumsalze vom Typ R¹³N(CH₃)₃⁺X⁻, R¹³R¹⁴N(CH₃)₂⁺X⁻, R¹³R¹⁴R¹⁵N(CH₃)⁺X- oder R¹³R¹⁴R¹⁵R¹⁶N⁺X⁻. Die Reste R¹³, R¹⁴, R¹⁵ und R¹⁶ können vorzugsweise unabhängig voneinander unsubstituiertes Alkyl mit einer Kettenlänge im Bereich von 8 bis 24 C-Atomen, insbesondere zwischen 10 und 18 C-Atomen, Hydroxyalkyl mit ca. 1 bis ca. 4 C-Atomen, Phenyl, C₂- bis C₁₈-Alkenyl, C₇- bis C₂₄-Aralkyl, (C₂H₄O)ₓH wobei x von ca. 1 bis ca. 3 bedeutet, ein oder mehrere Estergruppen enthaltende Alkylreste oder cyclische quartäre Ammoniumsalze sein. X⁻ ist ein geeignetes Anion, beispielsweise Methylsulfat, Chlorid oder ein halbes Äquivalent Sulfat.

### Anorganische und/oder organische Gerüststoffe (Builder)

Diese Gerüststoffe können mit Gewichtsanteilen von etwa 5 % bis etwa 80 % in erfindungsgemäßen Wasch- und Reinigungsmitteln enthalten sein. Anorganische Gerüststoffe umfassen beispielsweise Alkali-, Ammonium- und Alkanolammonium-salze von Polyphosphaten wie etwa Tripolyphosphate, Pyrophosphate, glasartige polymere Metaphosphate, Orthophosphate, Phosphonaten, Silikaten, Carbonaten einschließlich Bicarbonate und Sesquicarbonate, Sulfaten und Aluminosilikaten.

Aluminosilikatgerüststoffe sind für die vorliegende Erfindung bevorzugt. Besonders bevorzugt sind Zeolithe mit der Formel Na_{z}[(AlO₂)_{z}(SiO₂)_{y}]·xH₂O, worin z und y ganze Zahlen von mindestens 6 bedeuten, das Verhältnis von z zu y zwischen 1,0 bis 0,5 liegt, und x eine ganze Zahl von 15 bis 264 bedeutet. Aluminosilikategrüststoffe können von kristalliner oder amorpher Struktur sein und können natürlich vorkommend oder synthetisch hergestellt sein. Verfahren für die Herstellung von Aluminosilikatgerüststoffen werden beschrieben in US-3,985,669 und US-4,605,509. Besonders bevorzugt sind synthetische kristalline Aluminosilikatgerüststoffe, wie Zeolith A, Zeolith P(B) und Zeolith X.

Weitere Beispiele für Aluminosilikatgerüststoffe sind Alkalimetallsilikate, insbesondere diejenigen mit einem SiO₂:Na₂O-Verhältnis zwischen 1,6:1 und 3,2:1 sowie kristalline Schichtsilikate, beispielsweise kristalline Natriumschichtsilikate, wie beschrieben in US-4,664,839, z. B. SKS 6® (Clariant).

Wichtige organische Gerüststoffe sind Polycarboxylate auf Basis von Acrylsäure und Maleinsäure, ferner Gerüststoffe auf Citratbasis, wie Na-Citrat und andere löslichen Salze der Citronensäure.

Geeignete organische Gerüststoffe (Co-Builder) umfassen Polycarboxylverbindungen, wie beispielsweise Etherpolycarboxylate und Oxydisuccinate, wie in US-3,128,287 und US-3,635,830 beschrieben, sowie die in US-4,663,071 beschriebenen "TMS/TDS"-Gerüststoffe, weiterhin E-therhydroxypolycarboxylate, Copolymere von Maleinsäureanhydrid mit Ethylen oder Vinylmethylether, 1,3,5-Trihydroxybenzol-2,4,6-trisulfonsäure und Carboxymethyloxybernsteinsäure, sowie Polycarbonsäuren, wie Mellithsäure, Bernsteinsäure, Oxydibernsteinsäure, Polymaleinsäure, Benzol-1,3,5-tricarbonsäure, Carboxymethyl-oxybernsteinsäure sowie deren lösliche Salze.

### Bleichmittel

Erfindungsgemäße Waschmittel- und Reinigungsmittel, die mindestens eine erfindungsgemäße Mischung enthalten, können ferner ein oder mehrere Bleichmittel enthalten, sowie Bleichaktivatoren, Bleichkatalysatoren und geeignete Stabilisatoren. Als Bleichmittel kommen Persalze wie Perborate (Perborat-monohydrat, Perborat-tetrahydrat) und Percarbonat zum Einsatz. Persalze werden in der Regel mit sogenannten Bleichaktivatoren, bevorzugt Tetraacetylethylendiamin, kombiniert. Bleichaktivatoren werden im Stand der Technik oft als organische Peroxysäure-Vorläufer bezeichnet, da sie durch Reaktion mit Persalz eine Persäure wie z. B. Peressigsäure freisetzen. Je nach der Stabilität der betreffenden Persäure, ihrem Aggregatzustand und der Waschmittelform kann diese direkt im Waschmittel eingesetzt werden. Beispiele für Peroxysäuren, die für die Verwendung in dieser Erfindung bevorzugt sind, umfassen die Peroxydodecandisäure (DPDA), das Nonylamid der Peroxybernsteinsäure (NAPSA), das Nonylamid der Peroxyadipinsäure (NAPAA) und Decyldiperoxybernsteinsäure (DDPSA), Nonanoyl-amidocaproyloxy-benzolsulfonsäure und Alkanoyloxybenzolsulfonsäuren wie die Nonanoyloxybenzolsulfonsäure (NOBS) und die Lauroyloxybenzolsulfonsäure (LOBS). Besonders bevorzugt werden in den erfindungsgemäßen Wasch- und Reinigungsmitteln Bleichsysteme auf Basis Perborat und/ oder Percarbonat mit dem Bleichaktivator Tetraacetylethylendiamin (TAED) eingesetzt.

Weiterhin können erfindungsgemäße Wasch- und Reinigungsmittel einen oder mehrere Bleichkatalysatoren enthalten, beispielsweise Manganoxalat-dihydrat, oder Mangan-salenkomplexe.

Erfindungsgemäße Wasch- und Reinigungsmittel, welche erfindungsgemäße Mischung enthalten, können ferner übliche Hilfsmittelenthalten, die die Reinigungswirkung verstärken, zur Pflege des zu waschenden Textils dienen oder die Gebrauchseigenschaften des erfindungsgemäßen Waschmittels beeinflussen. Geeignete Hilfsmittel umfassen z. B. Enzyme, insbesondere Proteasen, Lipasen, Cellulasen und Amylasen, Mannanasen, Glycosidasen, weiterhin Enzymstabilisatoren, Schaumverstärker, Schaumbremsen, Anlauf- und/oder Korrosionsschutzmittel, Suspensionsmittel, Farbstoffe, Füllmittel, Soil-Release-Polymere, optische Aufheller, Desinfektionsmittel, Alkalien, hydrotrope Verbindungen, Antioxidantien, Parfüme, Lösungsmittel, Lösungsvermittler, Vergrauungsinhibitoren, Farbübertragungsinhibitoren, Dispergiermittel, Verarbeitungshilfsmittel, Weichmacher und Antistatika.

Ein weiterer Gegenstand der vorliegenden Erfindung ist die Verwendung von erfindungsgemäßen Mischungen als oder zur Herstellung von Mikronutrients (Spurennährstoffdünger). Ein weiterer Gegenstand der vorliegenden Erfindung sind Mikronutrients, enthaltend eine oder mehrere erfindungsgemäße Mischungen.

Unter Micronutrients werden im Rahmen der vorliegenden Erfindung feste Mischungen verstanden, die ein oder mehrere Komplexe von Bor, Eisen, Mangan, Kobalt, Kupfer, Zink oder Molybdän enthalten. Derartige Mikronutrients sind für landwirtschaftliche Kulturen (z. B. im Wein-, Obst-, und Hopfenanbau) geeignet und können in Anteilen von bis zu 5 Gew.-% einem Düngemittel zugesetzt werden, beispielsweise einem Nitrophoska-Dünger.

Ein weiterer Gegenstand der vorliegenden Erfindung ist die Verwendung von erfindungsgemäßen Mischungen zur Enthärtung von Flüssigkeiten, beispielsweise von Wasser.

### Beispiele

### Beispiel 1

Es wurden Mischungen aus Trilon® A 92 R mit einem Zusatz von 2 Gew.-% der hydrophob modifizierten Kieselsäure Sipernat® D 17 hergestellt. Dazu wurden die erforderlichen Mengen der beiden Komponenten in einem Behälter in einem Taumelmischer für 3 Min. schonend gemischt. Zur Untersuchung der Wasseraufnahme und der hieraus resultierenden Lagerstabilität wurden die Mischungen im Klimaschrank bei 38°C / 78% relativer Luftfeuchtigkeit eingelagert und die Rieselfähigkeit regelmäßig visuell beurteilt. Zum Vergleich wurde Trilon® A 92 R ohne Zusatz der Kieselsäure eingelagert.

**Tabelle 1: Lagertest von Trilon® A 92 R ohne und mit Zusatz von Sipernat® D 17. Visuelle Beurteilung bei 38 °C / 78 % rel. Luftfeuchte.**

| Trilon® A 92 R | Visuelle Beurteilung nach Lagerung bei 38°C / 78% relativer Luftfeuchte | | | | | | | |
|---|---|---|---|---|---|---|---|---|
| | 0 Std. | 8 Std. | 1 Tag | 2 Tage | 3 Tage | 4 Tage | 5 Tage | 1 Woche |
| a) kein Additiv | rieselfähig | Verklebt | Verklebt, angebacken | pastöse, trübe Masse | pastöse, fast klare Masse | Lagertest beendet | ---- | ---- |
| b) mit 2,0 Gew.-% Sipernat® D 17 | rieselfähig | rieselfähig | rieselfähig | rieselfähig | Granulat gequollen, rieselfähig | Granulat gequollen, rieselfähig | Granulat gequollen, rieselfähig | Granulat gequollen, rieselfähig |

### Beispiel 2

Es wurden Mischungen aus Trilon® M SG mit einem Zusatz von 5 Gew.-% der hydrophob modifizierten Kieselsäure Sipernat® D 10 hergestellt. Dazu wurden die erforderlichen Mengen der beiden Komponenten in einem Behälter in einem Taumelmischer für 3 Min. schonend gemischt. Zur Untersuchung der Wasseraufnahme und der hieraus resultierenden Lagerstabilität wurden die Mischungen im Klimaschrank bei 35°C / 65% relativer Luftfeuchtigkeit eingelagert und die Rieselfähigkeit regelmäßig visuell beurteilt. Zum Vergleich wurde Trilon® M SG ohne Zusatz der Kieselsäure eingelagert.

**Tabelle 2: Lagertest von Trilon® M SG ohne und mit Zusatz von Sipernat® D 10. Visuelle Beurteilung bei 35 °C / 65 % rel. Luftfeuchte.**

| Trilon® M SG | Visuelle Beurteilung nach Lagerung (bei 35°C / 65% relativer Luftfeuchte | | | | |
|---|---|---|---|---|---|
| | 0 Std. | 1 Tag | 2 Tage | 3 Tage | 6 Tage |
| a) kein Additiv | rieselfähig | Vollständig verklebt, Oberfläche verkrustet | pastöse, trübe Masse | pastöse, trübe Masse | ---- |
| b) mit 5 Gew.-% Sipernat® D10 | rieselfähig | rieselfähig | rieselfähig | Granulat gequollen, leicht verklebt, Großteil rieselfähig | Granulat gequollen, verklebt, teilweise noch rieselfähig |

Verzeichnis der verwendeten Handelsnamen:
Trilon® A 92 R (BASF) Nitrilotriacetat, Tri-Na-salz, Pulver, ca. 92%-ig
Trilon® M SG (BASF) Methylglycin-diacetat, Tri-Na-salz, Granulat, min. 76%-ig
Sipernat® D 10 (Evonik) Hydrophob modifizierte Fällungskieselsäure
Sipernat® D 17 (Evonik) Hydrophob modifizierte Fällungskieselsäure

## Patentansprüche

1. Pulverförmig, granulatförmig oder pelletförmig vorliegende Mischung, enthaltend
(A) ein oder mehrere Aminocarboxylat(e)
(B) ein Additiv, gewählt aus pyrogenen Kieselsäuren und Fällungskieselsäuren,
wobei das Gewichtsverhältnis von Aminocarboxylat(en) (A) zu Additiv(en) (B) insgesamt im Bereich von 95:5 bis 999:1 liegt.

2. Mischung nach Anspruch 1, **dadurch gekennzeichnet, dass** sie weder Sulfat noch Citrat enthält.

3. Mischung nach Anspruch 1 oder 2, bei der das Additiv (B) einen mittleren Teilchendurchmesser im Bereich von 1 nm bis 500 µm aufweist.

4. Mischung nach Anspruch 1 bis 3, bei der Aminocarboxylat (A) ausgewählt ist aus der Gruppe bestehend aus NTA, EDTA, DTPA, HEDTA, MGDA, GLDA, PDTA, EDDHA, HEIDA, IDS, EDDS, und β-ADA.

5. Mischung nach einem der Ansprüche 1 bis 4, bei der Additiv (B) gewählt wird aus Kieselsäuren mit einer spezifischen Oberfläche im Bereich von 25 bis 800 m²/g.

6. Mischung nach einem der Ansprüche 1 bis 5, bei der Additiv (B) gewählt wird aus Kieselsäuren mit einer Stampfdichte von 50 bis 300 g/l.

7. Mischung nach einem der Ansprüche 1 bis 6, enthaltend bis zu 50 Gew.-% festen Hilfsstoff (C), bezogen auf Summe von Aminocarboxylat(en) (A) und Additiv(en) (B), wobei Hilfsstoff (C) gewählt wird aus Zeolithen mit der Formel Na_{z}[(AlO₂)_{z}(SiO₂)_{y}]·xH₂O, worin z und y ganze Zahlen von mindestens 6 bedeuten, das Verhältnis von z zu y zwischen 1,0 bis 0,5 liegt und x eine ganze Zahl von 15 bis 264 bedeutet, festen Carbonaten, Hydrogencarbonaten, Phosphaten und organischen Hilfsstoffen.

8. Verwendung einer Mischung gemäß einem der Ansprüche 1 bis 7 zur Herstellung von Wasch-, Reinigungs- und Pflegemitteln.

9. Verwendung einer Mischung gemäß einem der Ansprüche 1 bis 7 , die einen oder mehrere Komplexe von Bor, Eisen, Mangan, Kobalt, Kupfer, Zink oder Molybdän als Micronutrient enthält, als Zusatz in einem Anteil von bis zu 5 Gew.-% zu einem Düngemittel.

10. Verwendung einer Mischung gemäß einem der Ansprüche 1 bis 7 zur Enthärtung von Flüssigkeiten.

11. Wasch-, Reinigungs- und Pflegemittel und Mikronutrients, enthaltend eine Mischung gemäß einem der Ansprüche 1 bis 7.

## Claims

1. A mixture which is present in pulverulent, granule or pellet form, comprising
(A) one or more aminocarboxylate(s),
(B) an additive selected from pyrogenic silicas and precipitated silicas,
where the weight ratio of aminocarboxylate(s) (A) to additive(s) (B) is overall in the range from 95:5 to 999:1.

2. The mixture according to claim 1, which comprises neither sulfate nor citrate.

3. The mixture according to claim 1 or 2, in which the additive (B) has an average particle diameter in the range from 1 nm to 500 µm.

4. The mixture according to claims 1 to 3, in which aminocarboxylate (A) is selected from the group consisting of NTA, EDTA, DTPA, HEDTA, MGDA, GLDA, PDTA, EDDHA, HEIDA, IDS, EDDS and β-ADA.

5. The mixture according to any one of claims 1 to 4, in which additive (B) is selected from silicas with a specific surface area in the range from 25 to 800 m²/g.

6. The mixture according to any one of claims 1 to 5, in which additive (B) is selected from silicas with a tamped density of from 50 to 300 g/l.

7. The mixture according to any one of claims 1 to 6, comprising up to 50% by weight of solid auxiliary (C), based on the sum of aminocarboxylate(s) (A) and additive(s) (B), where auxiliary (C) is selected from zeolites having the formula Na_{z}[(AlO₂)_{z}(SiO₂)_{y}]•ₓH₂O where z and y are integers of at least 6, the ratio of z to y is between 1.0 and 0.5 and x is an integer of 15 to 264, solid carbonates, hydrogencarbonates, phosphates and organic auxiliaries.

8. The use of a mixture according to any one of claims 1 to 7 for producing detergents, cleaners and care compositions.

9. The use of a mixture according to any one of claims 1 to 7 which comprises one or more complexes of boron, iron, manganese, cobalt, copper, zinc or molybdenum as micronutrient, as additive, in a fraction of up to 5% by weight, to a fertilizer.

10. The use of a mixture according to any one of claims 1 to 7 for softening liquids.

11. A detergent, cleaner or care composition or micronutrient, comprising a mixture according to any one of claims 1 to 7.

## Revendications

1. Mélange sous forme de poudre, de granulat ou de granulés, contenant
(A) un ou plusieurs aminocarboxylate(s)
(B) un additif, choisi parmi les silices pyrogènes et les silices précipitées,
le rapport pondéral de(s) aminocarboxylate(s) (A) à/aux additif(s) (B) se situant, au total, dans la plage de 95:5 à 999:1.

2. Mélange selon la revendication 1, **caractérisé en ce qu'**il ne contient, ni sulfate, ni citrate.

3. Mélange selon la revendication 1 ou 2, dans lequel l'additif (B) présente un diamètre moyen de particule dans la plage de 1 nm à 500 µm.

4. Mélange selon la revendication 1 à 3, dans lequel l'aminocarboxylate (A) est choisi dans le groupe constitué par NTA, EDTA, DTPA, HEDTA, MGDA, GLDA, PDTA, EDDHA, HEIDA, IDS, EDDS et β-ADA.

5. Mélange selon l'une quelconque des revendications 1 à 4, dans lequel l'additif (B) est choisi parmi les silices présentant une surface spécifique dans la plage de 25 à 800 m²/g.

6. Mélange selon l'une quelconque des revendications 1 à 5, dans lequel l'additif (B) est choisi parmi les silices présentant une densité tassée de 50 à 300 g/l.

7. Mélange selon l'une quelconque des revendications 1 à 6, contenant jusqu'à 50% en poids d'adjuvant solide (C) par rapport à la somme de(s) aminocarboxylate(s) (A) et de(s) additif(s) (B), l'adjuvant (C) étant choisi parmi les zéolithes ayant la formule Na_{z}[(AlO₂)_{z}(SiO₂)_{y}]•ₓH₂O, où z et y sont des nombres entiers d'au moins 6, le rapport de z à y est entre 1,0 et 0,5 et x est un nombre entier de 15 à 264, les carbonates solides, les hydrogénocarbonates, les phosphates et les adjuvants organiques.

8. Utilisation d'un mélange selon l'une quelconque des revendications 1 à 7 pour la préparation d'agents de lavage, de nettoyage et d'entretien.

9. Utilisation d'un mélange selon l'une quelconque des revendications 1 à 7, qui contient un ou plusieurs complexes du bore, du fer, du manganèse, du cobalt, du cuivre, du zinc ou du molybdène comme micronutriment, comme additif, en une proportion allant jusqu'à 5% en poids, pour un engrais.

10. Utilisation d'un mélange selon l'une quelconque des revendications 1 à 7 pour l'adoucissement de liquides.

11. Agents de lavage, de nettoyage et d'entretien et micronutriments, contenant un mélange selon l'une quelconque des revendications 1 à 7.
